# EUROPÄISCHE PATENTANMELDUNG

(11) **EP 1 400 415 A2**
(43) Veröffentlichungstag der Anmeldung: **24.03.2004**
(21) Anmeldenummer: 03090283.7
(22) Anmeldetag: 04.09.2003
(51) Int. Cl.: B60R 21/20

(54) **Insassenschutzeinrichtung**

(30) Priorität: 23.09.2002 DE 10244866
(71) Anmelder: TAKATA CORPORATION, Minato-ku, Tokyo 106-8510 (JP)
(72) Erfinder: Karlbauer, Ulrich, 89079 Ulm (DE); Getz, Robert, 89077 Ulm (DE); Bossecker, Maximilian, 76549 Hügelsheim (DE)
(74) Vertreter: Fischer, Uwe

(57) **Zusammenfassung**

Die Erfindung bezieht sich auf eine insassenschutzeinrichtung mit einem Gassack zur Befestigung in einem Fahrzeugsitz. Um bei einer solchen Insassenschutzeinrichtung zu erreichen, dass diese sehr einfach und kostengünstig herstellbar und installierbar ist und ein zuverlässiges Entfalten des Gassackes erreicht wird, wird erfindungsgemäß vorgeschlagen, dass die Insassenschutzeinrichtung (5) einen verschlusskappenfreien Aufnahmebehälter (70) für den Gassack (100) aufweist und die Öffnung (110) des Aufnahmebehälters (70) durch einen Sitzbezug (40) des Fahrzeugsitzes (10) abgedeckt wird. Der Sitzbezug (40) soll dabei derart an einer Seitenwand (80) des Aufnahmebehälters (70) befestigt sein, dass bei einem Aufblasen des Gassackes (100) mit Gas der Sitzbezug (40) im Bereich der Öffnung (110) des Aufnahmebehälters (70) aufreißt.

## Beschreibung

Die Erfindung bezieht sich auf eine Insassenschutzeinrichtung zur Befestigung in einem Fahrzeugsitz mit einem Aufnahmebehälter für einen Gassack.

Eine derartige Insassenschutzeinrichtung ist beispielsweise aus der deutschen Offenlegungsschrift DE 196 25 436 bekannt. Die vorbekannte Insassenschutzeinrichtung weist einen Aufnahmebehälter auf, in dem ein aufblasbarer Gassack aufgewahrt wird. Der Aufnahmebehälter ist durch eine Abdeckkappe verschlossen. Die Abdeckkappe weist in ihrem Mittelbereich eine Sollbruchstelle in Form einer Nut auf. An dieser Sollbruchstelle bricht die Abdeckkappe auf, sobald der Gassack im Falle eines Fahrzeugunfalls aufgeblasen wird und einen entsprechenden Innendruck auf die Abdeckkappe ausübt. Bei der vorbekannten Insassenschutzeinrichtung ist der Sitzbezug mit einem Öffnungsschlitz im Bereich der Abdeckkappe des Aufnahmebehälters versehen. Durch diesen Schlitz kann der Gassack beim Aufblasen durch den Sitzbezug hindurchtreten und sich außerhalb des Fahrzeugsitzes entfalten. Der Sitzbezug ist im Bereich seines Schlitzes an der Abdeckkappe des Aufnahmebehälters befestigt, und zwar derart, dass die beiden durch den Schlitz getrennten Teilbereiche des Sitzbezuges auf unterschiedlichen Seiten der Sollbruchstelle an der Abdeckkappe befestigt sind. Diese Befestigung des Sitzbezugs an der Abdeckkappe hat zur Folge, dass beim Aufblasen des Gassacks die an der Sollbruchstelle aufbrechende Abdeckkappe den Schlitz des Sitzbezuges öffnet und den Gassack "passieren" lässt.

Eine andere Insassenschutzeinrichtung ist in der deutschen Gebrauchsmusterschrift DE 299 12 825 beschrieben. Bei dieser vorbekannten Insassenschutzeinrichtung ist ebenfalls ein Aufnahmebehälter für einen Gassack vorgesehen. Der Aufnahmebehälter weist ein aufklappbares Abdeckungsteil auf, das den Aufnahmebehälter verschließt. Das Abdeckungsteil wird mit Zugmitteln aufgeklappt, sobald der Gassack aufgeblasen wird. Um das Aufklappen des Abdeckungsteils zu ermöglichen, ist ein Scharnierabschnitt vorgesehen, um den das Abdeckungsteil bei entsprechender Betätigung durch die Zugmittel geschwenkt wird.

Eine weitere Insassenschutzeinrichtung ist in der deutschen Gebrauchsmusterschrift DE 296 01 257 beschrieben. Diese vorbekannte Insassenschutzeinrichtung weist einen einen Gassack aufnehmenden Aufnahmebehälter auf, der mit einer Abdeckkappe verschlossen ist. Die Abdeckkappe ist um eine Schwenkachse drehbar gelagert und hat an ihrer dem Sitzbezug zugewanden Außenseite Reißzähne. Wird nun der Gassack aufgeblasen, so drückt der Gassack von innen gegen die Abdeckkappe und schwenkt diese nach außen auf, wodurch die Reißzähne der Abdeckkappe den Sitzbezug aufreißen und eine Öffnung für den Gassack schaffen.

Der Erfindung liegt die Aufgabe zugrunde, eine Insassenschutzeinrichtung anzugeben, die sich einfach und kostengünstig herstellen und installieren lässt und ein zuverlässiges Entfalten des Gassacks der Insassenschutzeinrichtung sicherstellt.

Diese Aufgabe wird ausgehend von einer Insassenschutzeinrichtung der eingangs angegebenen Art erfindungsgemäß durch die kennzeichnenden Merkmale des Anspruchs 1 gelöst. Vorteilhafte Ausgestaltungen der erfindungsgemäßen Insassenschutzeinrichtung sind in den Unteransprüchen beschrieben.

Danach ist erfindungsgemäß vorgesehen, dass der Aufnahmebehälter für den Gassack verschlussklappenfrei ausgeführt ist. Durch diese Maßnahme wird - anders als bei den oben beschriebenen vorbekannten Insassenschutzeinrichtungen - eine Komponente weggelassen, wodurch die Herstellungskosten gesenkt werden. Statt einer Abdeckkappe wird bei der erfindungsgemäßen Insassenschutzeinrichtung der sowieso vorhandene Sitzbezug des Fahrzeugsitzes zum Abdecken des "offenen" Aufnahmebehälters verwendet. Um nun sicherzustellen, dass sich der Gassack richtig entfalten kann, muss der Sitzbezug beim Aufblasen des Gassacks aufreißen. Dies wird erfindungsgemäß dadurch erreicht, dass der Sitzbezug an einer Seitenwand des Aufnahmebehälters befestigt ist. Durch die seitliche Befestigung des Sitzbezuges wird erfindungsgemäß erreicht, dass der Sitzbezug bei einem Aufblasen des Gassacks nicht "nachgeben" oder "ausweichen" kann, sondern aufgrund des Druckes des Gassackes quasi sofort aufreißen muss. Durch das Aufreißen des Sitzbezugs wird dann ein Öffnung im Sitzbezug geschaffen, durch die der Gassack hindurchtreten kann. Ein "aktives" Element mit Reißzähnen zum Aufreißen des Sitzbezuges - wie es bei der oben beschriebenen Insassenschutzeinrichtung gemäß dem deutschen Gebrauchsmuster DE 296 01 257 vorgesehen ist - ist bei der erfindungsgemäßen Insassenschutzeinrichtung also nicht erforderlich.

Gemäß einer vorteilhaften Ausgestaltung der erfindungsgemäßen Insassenschutzeinrichtung ist vorgesehen, dass der Sitzbezug im Bereich der Öffnung des Aufnahmebehälters eine Sollbruchstelle aufweist. Durch diese Sollbruchstelle wird nämlich das Aufreißen des Sitzbezuges durch den sich entfaltenden Gassack erleichtert.

Der Sitzbezug sollte dann in vorteilhafter Weise im Bereich der Sollbruchstelle an der Seitenwand befestigt sein. Dadurch wird nämlich erreicht, dass bereits ein geringer Druck bzw. Gegendruck des Gassacks ausreicht, um den Sitzbezug aufzureißen.

Eine solche Sollbruchstelle kann besonders einfach und damit vorteilhaft durch eine Naht gebildet sein, die einen Schlitz im Sitzbezug schließt.

Vorteilhaft ist es, wenn der Sitzbezug im Schlitzbereich unter Bildung zweier aneinander grenzender Säume ins Sitzinnere umgeklappt ist und die aneinander grenzenden Randbereiche der beiden Säume zusammen genäht sind. Die Verbindung zwischen dem Sitzbezug und der Seitenwand des Aufnahmebehälters lässt sich dann sehr einfach und damit vorteilhaft herstellen, indem zumindest einer der beiden Säume des Sitzbezuges mit der Seitenwand verbunden wird.

Im Übrigen wird es als vorteilhaft angesehen, wenn der Aufnahmebehälter oben am Fahrzeugsitz angebracht ist, und zwar mit seiner Öffnung dem oberen Ende der Rückenlehne des Fahrzeugsitzes zugewandt. Der Gassack kann sich dann zwischen der Kopfstütze und dem Kopf des Fahrzeuginsassen entfalten.

Um ein besonders rasches Aufreißen des Sitzbezuges zu gewährleisten, wird es als vorteilhaft angesehen, wenn der Sitzbezug an derjenigen Seitenwand des Aufnahmebehälters angebracht ist, die dem Fahrzeuginsassen zugewandt ist.

Besonders einfach und damit vorteilhaft lässt sich der Sitzbezug mit einer Kunststoffleiste an der Seitenwand befestigen, indem die eine Seite der Leiste mit dem Sitzbezug und die andere Seite der Leiste mit der Seitenwand verbunden wird. Vorteilhaft kann die eine Leistenseite mit dem Sitzbezug vernäht sein und/oder die andere Leistenseite an der Seitenwand eingehakt sein.

Gemäß einer weiteren Ausgestaltung der erfindungsgemäßen Insassenschutzeinrichtung ist vorgesehen, dass die Befestigung des Sitzbezuges an der Seitenwand durch mindestens zwei an der Seitenwand angebrachte Haken bewirkt wird, die in Löcher im Saum des Sitzbezuges eingehakt werden. Bei dieser weiteren Ausgestaltung der Insassenschutzeinrichtung wird die Befestigung des Sitzbezuges an der Seitenwand also ohne eine Leiste bewirkt.

Gemäß einer dritten vorteilhaften Ausgestaltung der erfindungsgemäßen Insassenschutzeinrichtung ist vorgesehen, dass die Befestigung des Sitzbezuges an der Seitenwand durch eine Schnappleiste bewirkt ist, in die am Sitzbezug befestigte Schnapphaken einschnappen. Ein wesentlicher Vorteil dieser dritten Ausgestaltung der Insassenschutzeinrichtung ist darin zu sehen, dass sich die Verbindung zwischen dem Sitzbezug und der Seitenwand aufgrund der Schnappleiste sehr einfach bewerkstelligen lässt, da nach der Montage des Aufnahmebehälters in dem Fahrzeugsitz lediglich noch die am Sitzbezug befestigten Schnapphaken in der Schnappleiste eingerastet bzw. "eingeschnappt" werden müssen.

Bei dieser dritten vorteilhaften Ausgestaltung der erfindungsgemäßen Insassenschutzeinrichtung kann die Schnappleiste vorteilhaft unmittelbar an der Seitenwand befestigt sein. Stattdessen kann sie auch über weitere Schnapphaken an der Seitenwand befestig sein.

Wie bereits oben angesprochen, kann der Sitzbezug im Bereich der Sollbruchstelle mit der Seitenwand verbunden sein; stattdessen oder zusätzlich kann der Sitzbezug auch im unteren Bereich der Seitenwand befestigt sein, und zwar an der dem Fahrzeuginsassen zugewandten Seitenwand des Aufnahmebehälters.

Um die Bequemlichkeit des Fahrzeugsitzes für den Fahrzeuginsassen zu erhöhen, wird es als vorteilhaft angesehen, wenn zwischen dem Sitzbezug und dem Aufnahmebehälter ein Sitzpolster vorgesehen ist. Im Bereich der Öffnung des Aufnahmebehälters sollte dann zumindest eine Sollbruchstelle im Sitzpolster vorhanden sein, um ein Aufreißen von Sitzbezug und Sitzpolster beim Aufblasen des Gassackes zu erleichtern.

Die Sollbruchstelle kann in besonders einfacher Weise und damit besonders vorteilhaft dadurch bereitgestellt werden, dass im Sitzpolster zumindest ein Loch vorgesehen ist, das im Bereich der Öffnung des Aufnahmenbehälters liegt.

Bei der erfindungsgemäßen Insassenschutzeinrichtung kann es sich beispielsweise um ein "roll-over" (Überroll)-Modul zum Schutz des Kopfes des Fahrzeuginsassen im Falle eines Fahrzeugüberschlags oder um ein "side-protection"-Modul - also um ein Seitenaufprallschutz-Modul - handeln.

Zur Erläuterung der Erfindung zeigen:
- Figur 1a und 1b: eine Darstellung, wie sich ein Gassack bei einer Insassenschutzeinrichtung entfalten würde, die keine Befestigung des Sitzbezuges an einer Seitenwand eines Aufnahmebehälters aufweist,
- Figur 2a,2b,2c: eine Darstellung, wie sich ein Gassack bei einer erfindungsgemäßen Insassenschutzeinrichtung entfaltet, bei der eine Befestigung des Sitzbezuges vorgesehen ist,
- Figur 3: ein Ausführungsbeispiel für eine erfindungsgemäße Insassenschutzeinrichtung, bei der der Sitzbezug im oberen Bereich der Seitenwand des Aufnahmebehälters befestigt ist,
- Figur 4: ein Ausführungsbeispiel für eine erfindungsgemäße Insassenschutzeinrichtung, bei der der Sitzbezug im unteren Bereich der Seitenwand des Aufnahmebehälters befestigt ist,
- Figur 5, 5a: zwei Ausführungsbeispiele für eine erfindungsgemäße Insassenschutzeinrichtung mit einer Kunststoffleiste zum Einhaken des Sitzbezuges an einer Seitenwand des Aufnahmebehälters,
- Figur 6: ein Ausführungsbeispiel für eine erfindungsgemäße Insassenschutzeinrichtung, bei der Haken an der Seitenwand des Aufnahmebehälters zum "Einhängen" des Sitzbezugs dienen,
- Figur 7a und 7b: ein Ausführungsbeispiel der erfindungsgemäßen Insassenschutzeinrichtung, bei der eine im Sitzpolster integrierte Schnappleiste vorgesehen ist
und
- Figur 8: ein Ausführungsbeispiel für eine erfindungsgemäße Insassenschutzeinrichtung, bei der Haken einer am Sitzbezug befestigten Kunststoffschiene an der Seitenwand des Aufnahmebehälters eingerastet werden.

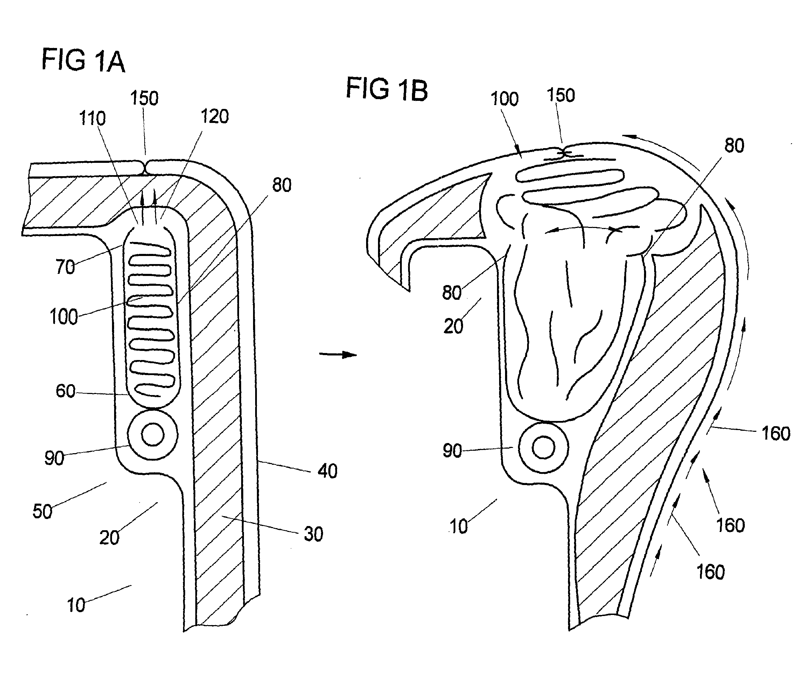

Die Figuren 1a und 1b zeigen, wie sich ein Gassack bei einer Insassenschutzeinrichtung entfalten würde, bei der keine Befestigung des Sitzbezuges an einer Seitenwand des Aufnahmebehälters des Gassacks vorgesehen ist. Konkret erkennt man in den Figuren 1a und 1b einen Fahrzeugsitz 10, der einen Lehnenrahmen 20, ein Sitzpolster 30 sowie einen Sitzbezug 40 aufweist. In dem Fahrzeugsitz 10 ist eine Insassenschutzeinrichtung 50 vorgesehen, die ein Airbagmodul 60 aufweist. Zu dem Airbagmodul 60 gehört ein nach oben offener Aufnahmebehälter 70, der seitlich durch Seitenwände 80 begrenzt ist. Unten an dem Aufnahmebehälter 70 ist ein Füllrohr 90 mit einem nicht näher dargestellten Gasgenerator angeschlossen. Mit dem Gasgenerator und dem Füllrohr 90 wird ein in dem Aufnahmebehälter 70 enthaltener Gassack 100 im Falle eines Fahrzeugunfalls aufgeblasen.

Der Vorgang des Aufblasens soll nun näher anhand beider Figuren 1a und 1b beschrieben werden. In der Figur 1a erkennt man, dass der Gassack 100 noch luftleer ist und sich vollständig im Aufnahmebehälter 70 des Airbagmoduls 60 befindet. Wird der Gassack 100 nun durch den Gasgenerator und das Füllrohr 90 aufgeblasen, so muss er sich in Richtung der Öffnung 110 des Aufnahmebehälters 70 entfalten, da eine seitliche Ausbreitung aufgrund der Seitenwände 80 nicht möglich ist. Diese Ausbreitung ist in der Figur 1a durch Pfeile 120 dargestellt.

In der Figur 1b erkennt man nun, wie der Gassack 100 teilweise den Aufnahmebehälter 70 verlassen hat. Durch den Gassack 100 ist das Sitzpolster 30 oberhalb der Öffnung 110 des Aufnahmebehälters 70 auseinander gedrückt; eine Sollbruchstelle 150 im Sitzbezug 40 oberhalb der Öffnung 110 des Aufnahmebehälters 70 ist jedoch noch nicht aufgerissen worden. Dies liegt konkret daran, dass der Sitzbezug 40 geringfügig elastisch ist und es so zu einem "Wandern" des Sitzbezuges kommt. Dies ist in der Figur 1b durch Pfeile 160 dargestellt. Aufgrund dieses Ausdehnens des Sitzbezuges 40 kann sich der Gassack 100 zumindest teilweise innerhalb des Fahrzeugsitzes 10 entfalten, was ein definiertes Aufreißen der Sollbruchstelle 150, die beispielsweise durch eine Reißnaht gebildet sein kann, verhindert.

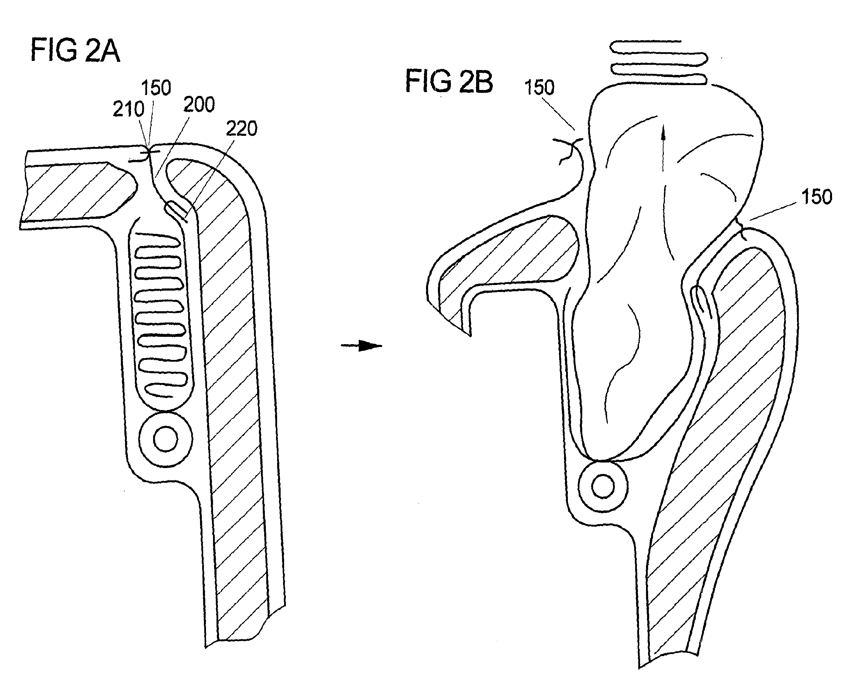

In den Figuren 2a und 2b ist nun anhand eines Ausführungsbeispiels der erfindungsgemäßen Insassenschutzeinrichtung erläutert, wie das "Ausbeulen" des Sitzbezugs 40 durch den Gassack 100 vermieden werden kann. In den Figuren 2a und 2b sowie auch in den übrigen weiter unten erläuterten Figuren werden für identische Elemente der Insassenschutzeinrichtung die identischen Bezugszeichen verwendet.

In den Figuren 2a und 2b erkennt man wiederum einen Fahrzeugsitz 10 mit einem Lehnenrahmen 20, einem Sitzpolster 30 und einem Sitzbezug 40. In dem Fahrzeugsitz 10 ist eine Insassenschutzeinrichtung 50 mit einem Airbagmodul 60 integriert. Das Airbagmodul 60 weist einen Aufnahmebehälter 70 für einen Gassack 100 auf, der durch einen Gasgenerator und ein Füllrohr 90 mit Gas befüllt werden kann.

Im Unterschied zu der Insassenschutzeinrichtung gemäß den Figuren 1a und 1b ist bei dem Ausführungsbeispiel gemäß den Figuren 2a und 2b eine Befestigung des Sitzbezuges 40 an der Seitenwand 80 des Aufnahmebehälters 70 vorgesehen. So zeigen die Figuren 2a und 2b ein Befestigungselement 200, das mit seinem einen Ende 210 an dem Sitzbezug 40 und mit seinem anderen Ende 220 an der Seitenwand 80 des Aufnahmebehälters 70 befestigt ist.

Kommt es nun zu einem Aufblasen des Gassacks 100, so entfaltet sich der Gassack 100 wiederum oberhalb des Aufnahmebehälters 70 und übt einen Druck gegen den Sitzbezug 40 aus. Aufgrund dieses Druckes wird die Sollbruchstelle 150 reißen. Im Unterschied zu der Insassenschutzeinrichtung gemäß den Figuren 1a und 1b kann es zu keinem Ausbeulen des Sitzbezuges 40 kommen, weil nämlich der Sitzbezug 40 im Bereich der Öffnung 110 des Aufnahmebehälters 70 an der Seitenwand 80 des Aufnahmebehälters 70 fixiert ist. Aufgrund dieser Fixierung wird ein "Wandern" des Sitzbezuges 40 bzw. ein "Ausbeulen" des Sitzbezugs 40 zuverlässig unterbunden. Der sich ausbreitende Gassack 100 muss damit zwangsläufig die Sollbruchstelle 150 aufreißen und somit eine Öffnung nach "draußen" schaffen.

Da das Wandern bzw. Ausbeulen des Sitzbezuges 40 bei der Insassenschutzeinrichtung gemäß den Figuren 2a und 2b zuverlässig vermieden wird, wird ein sehr schnelles Öffnen des Gassack 100 gewährleistet.

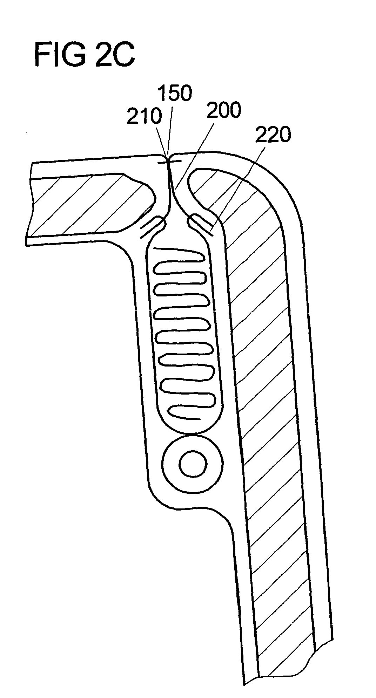

Die Figur 2c zeigt eine alternative Art der Befestigung des Sitzbezuges 40. Der Sitzbezug 40 ist hierbei mittels zweier Befestigungselemente 200 und 200' mit dem Aufnahmebehälter 70 verbunden.

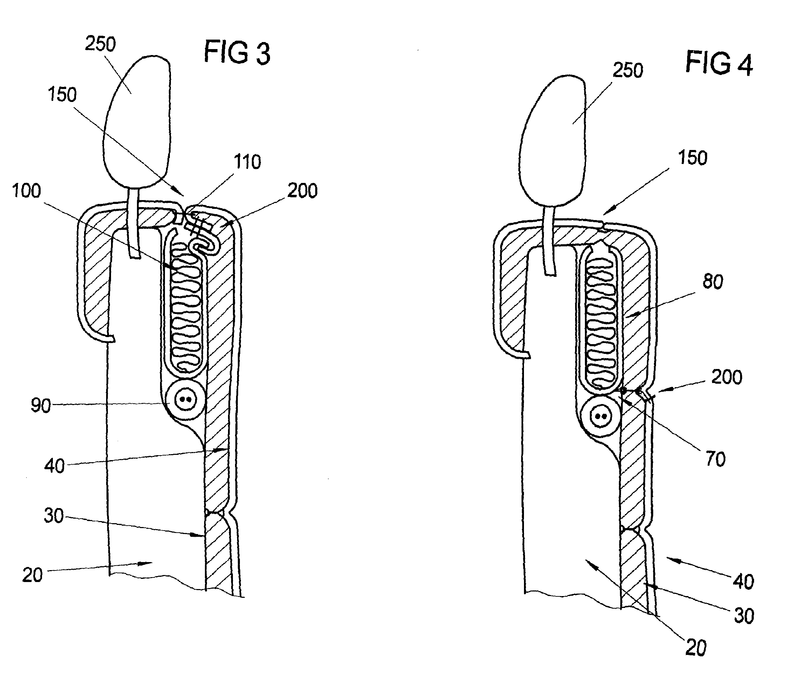

Die Figur 3 zeigt die erfindungsgemäße Insassenschutzeinrichtung gemäß den Figuren 2a und 2b noch mal in einer anderen Darstellung. Man erkennt den Fahrzeugsitz 10 mit dem Sitzpolster 30, dem Sitzbezug 40 und dem Lehnenrahmen 20. in dem Fahrzeugsitz 10 ist die Insassenschutzeinrichtung 50 integriert. Im Übrigen erkennt man in der Figur 3 eine Kopfstütze 250, die oben auf dem Fahrzeugsitz 10 befestigt ist.

In der Figur 4 ist ein Ausführungsbeispiel für eine erfindungsgemäße Insassenschutzeinrichtung dargestellt, bei der der Sitzbezug 40 im unteren Bereich der Seitenwand 80 des Aufnahmebehälters 70 befestigt ist. Konkret erkennt man in der Figur 4, dass das Befestigungsmittel 200 an dem an das Füllrohr 90 angrenzenden Bereich der Seitenwand 80 befestigt ist. Oberhalb der Öffnung 110 des Aufnahmebehälters 70 ist eine Reißnaht 150 als Sollbruchstelle vorgesehen.

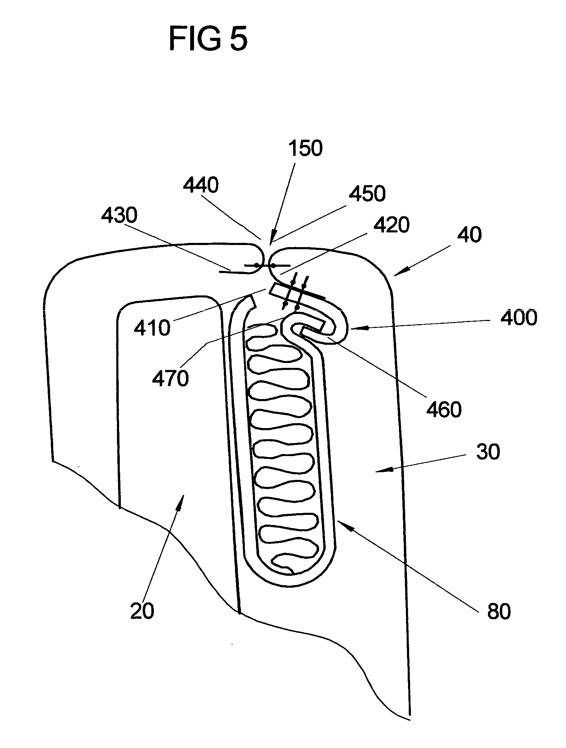

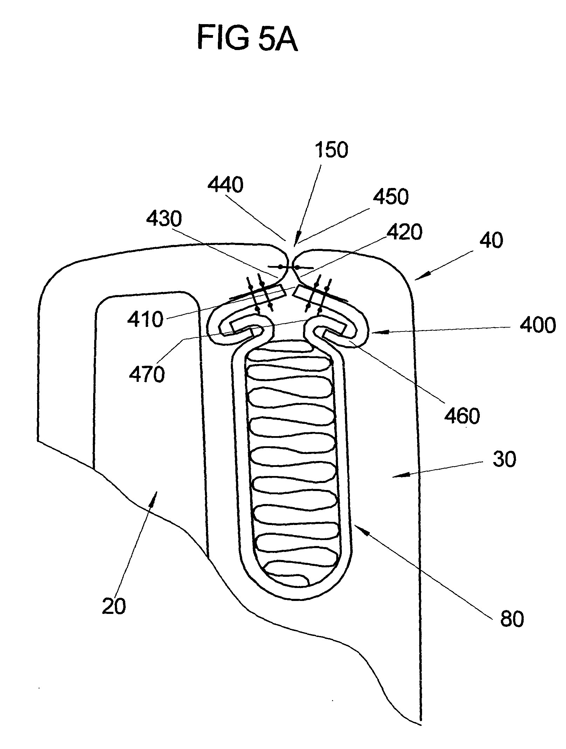

Die Figur 5 zeigt ein Ausführungsbeispiel für eine erfindungsgemäße Insassenschutzeinrichtung, bei der eine Kunststoffleiste 400 zur Befestigung des Sitzbezuges 40 an der Seitenwand 80 des Aufnahmebehälters 70 vorgesehen ist. Bei der Insassenschutzeinrichtung gemäß der Figur 5 ist die Seitenwand 80 in ihrem oberen Bereich derart abgebogen, dass die Kunststoffleiste 400 in die Seitenwand 80 eingehängt werden kann. Zur Befestigung der Kunststoffleiste 400 ist diese an ihrer einen Leistenseite 410 mit einem Saum 420 des Sitzbezuges 40 vernäht. Der Saum 420 ist dabei dadurch gebildet, dass der Sitzbezug 40 im Bereich der Reißnaht 150 zweimai ins Sitzinnere umgeklappt ist. Durch dieses Umklappen ist dabei sowohl der eine Saum 420 als auch ein zweiter Saum 430 entstanden. Die Randbereiche 440 und 450 der beiden Säume grenzen aneinander und sind durch die Reißnaht 150 miteinander vernäht.

Die andere Leistenseite 460 der Kunststoffleiste 400 ist gebogen ausgeführt und kann somit in den ebenfalls gebogenen oberen Bereich 470 der Seitenwand 80 eingehakt werden. Die andere Leistenseite 460 weist hierfür eine "Gegenform" zum oberen Bereich 470 der Seitenwand 80 auf.

Bei dem Ausführungsbeispiel gemäß der Darstellung in der Figur 5 ist lediglich der Saum 420 an der Seitenwand 80 befestigt. In entsprechender Weise kann selbstverständlich auch der zweite Saum 430 an der Seitenwand 80 befestigt werden. Beispielsweise können beide Säume 420 und 430 an der Seitenwand 80 befestigt werden, wobei der eine Saum 420 vorzugsweise an der in Fahrtrichtung vorderen Seite der Seitenwand und der zweite Saum 430 an der in Fahrtrichtung hinteren Seite der Seitenwand befestigt wird (vgl. Figur 5a).

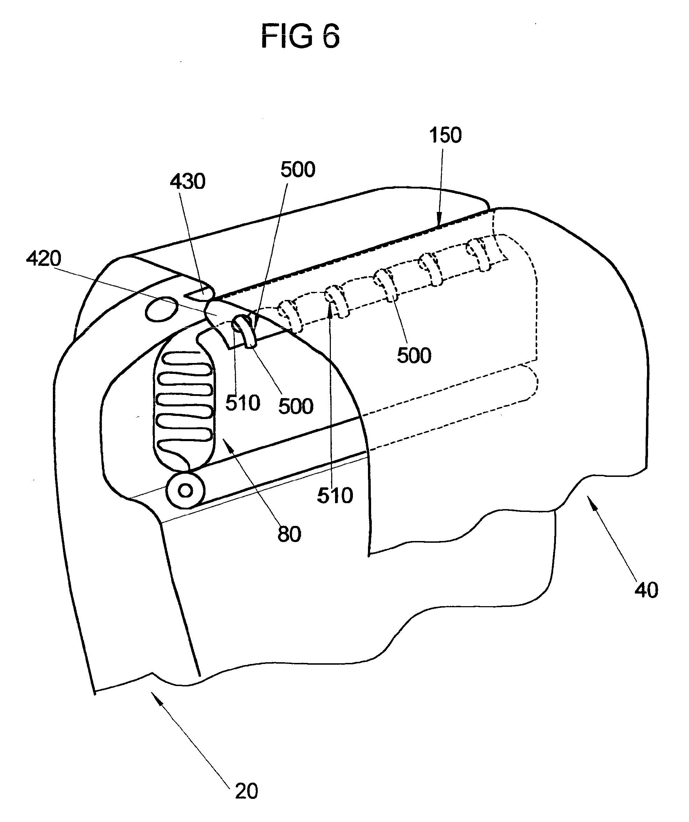

Die Figur 6 zeigt ein Ausführungsbeispiel für eine erfindungsgemäße Insassenschutzeinrichtung, bei der Haken 500 an der Seitenwand 80 des Aufnahmebehälters 70 vorgesehen sind.

Der Saum 420 des Sitzbezuges 40 weist Löcher 510 auf, deren Abstände untereinander dem Abstand der Haken 500 entsprechen.

Zum Befestigen des Sitzbezuges 40 an der Seitenwand 80 des Aufnahmebehälters 70 werden die Löcher 510 des Saums 420 in die Haken 500 der Seitenwand 80 eingehakt, wodurch eine Befestigung des Saumes 420 erreicht wird.

Im Übrigen erkennt man in der Figur 6, dass der Saum 420 sowie der weitere Saum 430 des Sitzbezuges 40 durch die Reißnaht 150 miteinander vernäht sind.

Bei dem Ausführungsbeispiel gemäß der Darstellung in der Figur 6 ist lediglich der Saum 420 an der Seitenwand 80 befestigt. In entsprechender Weise kann selbstverständlich auch der zweite Saum 430 an der Seitenwand 80 befestigt werden.

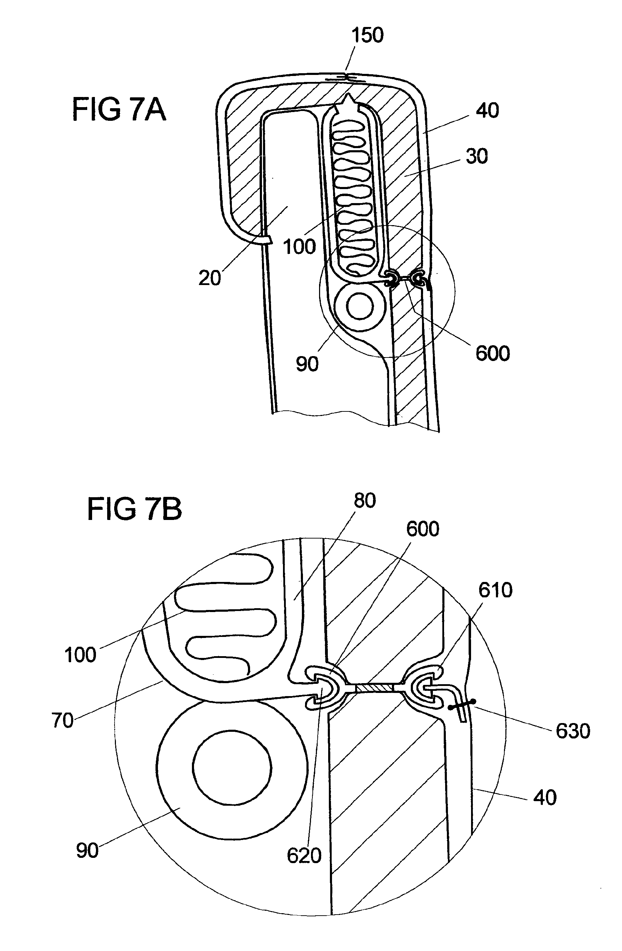

Die Figuren 7a und 7b zeigen ein Ausführungsbeispiel für eine Insassenschutzeinrichtung, bei der die Fixierung des Sitzbezuges 40 im unteren Bereich des Aufnahmebehälters 70 erfolgt, wie dies bereits weiter oben im Zusammenhang mit der Figur 4 erläutert worden ist.

Bei dem Ausführungsbeispiel gemäß den Figuren 7a und 7b ist eine Schnappleiste 600 vorgesehen, an der Schnapphaken 610 sowie weitere Schnapphaken 620 befestigt sind. Die Schnapphaken 610 sind beispielsweise durch Nähte 630 an dem Sitzbezug 40 festgenäht. Die weiteren Schnapphaken 620 sind unmittelbar an der Seitenwand 80 des Aufnahmebehälters 70 befestigt.

Im Übrigen lässt sich in den Figuren 7a und 7b erkennen, dass die Schnappleiste 600 im Sitzpolster 30 eingearbeitet - beispielsweise eingeschäumt ist. Mit anderen Worten ist die Schnappleiste 600 also Teil des Sitzpolsters 30, an dem auf der einen Seite die Schnapphaken 610 des Sitzbezuges 40 und auf der anderen Seite die weiteren Schnapphaken 620 der Seitenwand 80 eingerastet werden.

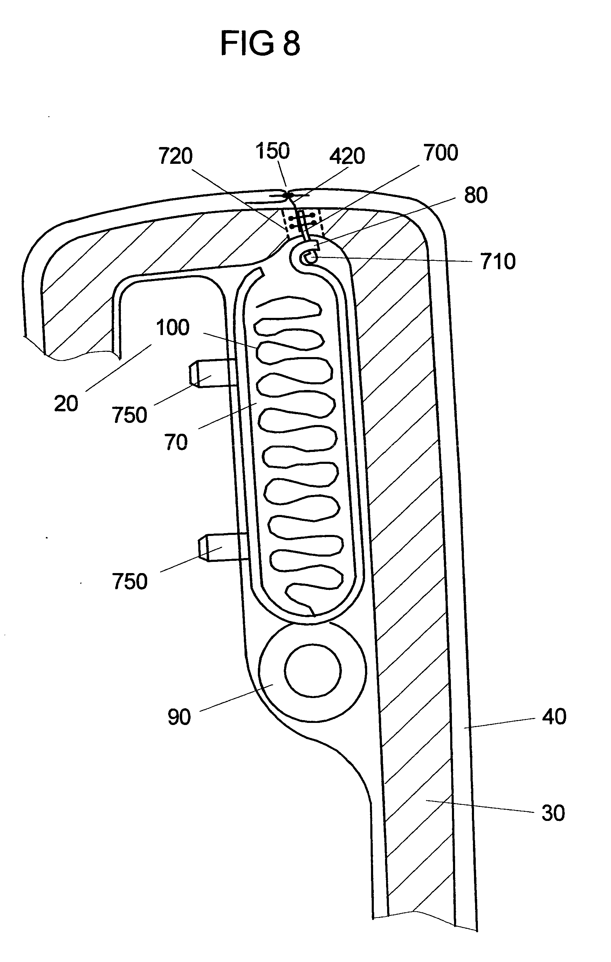

Die Figur 8 zeigt ein Ausführungsbeispiel für die erfindungsgemäße Insassenschutzeinrichtung, bei der eine Kunststoffschiene 700 an dem einen Saum 420 des Sitzbezuges 40 angenäht ist. An der Kunststoffschiene 700 ist ein Haken 710 - oder mehrere Haken 710 - befestigt; jeder dieser Haken 710 ist dabei jeweils durch ein Loch 720 im Sitzpolster 30 geführt.

Die Löcher 720 dienen dabei einerseits dazu, die Verbindung des Hakens 710 bzw. der Haken 710 mit der Seitenwand 80 des Aufnahmebehälters 70 zu gewährleisten; anderseits dienen sie auch dazu, eine Sollbruchstelle im Sitzpolster 30 zu bilden. Soll sich der Gassack 100 nämlich entfalten so muss neben der Reißnaht 150 auch das Sitzpolster 30 geöffnet werden. Ein solches Öffnen bzw. "Aufbrechen" oder "Aufreißen" des Sitzpolsters 30 wird durch die Löcher 720 im Sitzpolster 30 deutlich erleichtert.

Die Löcher 720 im Sitzpolster 30 können ersatzweise auch durch einen Spalt im Sitzpolster 30 ersetzt werden, durch den dann die Haken 710 von der Kunststoffschiene 700 zur Seitenwand 80 des Aufnahmebehälter 70 geführt werden. Die Löcher 720 haben gegenüber einem solchen Spalt den Vorteil, dass der obere Bereich des Sitzpolsters 30 insgesamt stabiler ist, wodurch ein günstigeres Anschmiegen des Sitzbezuges 40 am Sitzpolster 30 erreicht wird und insbesondere eine Wellenbildung des Sitzbezuges 40 auf dem Sitzpolster 30 vermieden wird.

In der Figur 8 sind darüber hinaus Befestigungselemente 750 angezeigt, mit denen der Aufnahmebehälter 70 und damit das Airbagmodul 60 an dem Lehnenrahmen 20 des Fahrzeugsitzes 10 befestigt ist.

### Bezugszeichenliste

- 10: Fahrzeugsitz
- 20: Lehnenrahmen
- 30: Sitzpolster
- 40: Sitzbezug
- 50: Insassenschutzeinrichtung
- 60: Airbagmodul
- 70: Aufnahmebehälter
- 80: Seitenwand
- 90: Füllrohr mit Gasgenerator
- 100: Gassack
- 110: Öffnung
- 120: Pfeile
- 150: Reißnaht
- 160: Pfeile
- 200: Befestigungselement
- 210: ein Ende des Befestigungselements
- 220: ein weiteres Ende des Befestigungselements
- 250: Kopfstütze
- 300: unterer Bereich der Seitenwand
- 400: Kunststoffleiste
- 410: eine Seitenleiste
- 420: Saum
- 430: weiterer Saum
- 440: Randbereich
- 450: Randbereich
- 460: andere Leistenseite
- 500: Haken
- 510: Löcher
- 600: Schnappleiste
- 610: Schnapphaken
- 620: weitere Schnapphaken
- 630: Naht
- 700: Kunststoffschiene
- 710: Haken
- 720: Löcher
- 750: Befestigungselemente

## Patentansprüche

1. Insassenschutzeinrichtung (50) zur Befestigung in einem Fahrzeugsitz (10) mit einem Aufnahmebehälter für einen Gassack (100), **dadurch gekennzeichnet, dass** der Aufnahmebehälter (70) verschlussklappenfrei ist und die Öffnung (110) des Aufnahmebehälters (70) durch einen Sitzbezug (40) des Fahrzeugsitzes (10) abgedeckt wird und der Sitzbezug (40) derart an einer Seitenwand (80) des Aufnahmebehälters (70) befestigt ist, dass bei einem Aufblasen des Gassackes (100) mit Gas der Sitzbezug (40) im Bereich der Öffnung (110) des Aufnahmebehälters (70) aufreißt.

2. Insassenschutzeinrichtung nach Anspruch 1, **dadurch gekennzeichnet, dass** der Sitzbezug (40) im Bereich der Öffnung (110) des Aufnahmebehälters (70) eine Sollbruchstelle (150) aufweist.

3. Insassenschutzeinrichtung nach Anspruch 2, **dadurch gekennzeichnet, dass** der Sitzbezug (40) im Bereich der Sollbruchstelle (150) an der Seitenwand (80) befestigt ist.

4. Insassenschutzeinrichtung nach Anspruch 2 oder 3, **dadurch gekennzeichnet, dass** die Sollbruchstelle (150) durch eine Reißnaht gebildet ist.

5. Insassenschutzeinrichtung nach Anspruch 4, **dadurch gekennzeichnet, dass** der Sitzbezug (40) im Reißnahtbereich unter Bildung zweier aneinander grenzender Säume (420 und 430) ins Sitzinnere umgeklappt ist und die aneinander grenzenden Randbereiche (440, 450) der Säume (420, 430) zusammengenäht sind.

6. Insassenschutzeinrichtung nach Anspruch 5, **dadurch gekennzeichnet, dass** zumindest einer der beiden Säume (420) an der Seitenwand (80) des Aufnahmebehälters (70) befestigt ist.

7. Insassenschutzeinrichtung nach einem der vorangehenden Ansprüche, **dadurch gekennzeichnet, dass** der Aufnahmebehälter (70) derart im Fahrzeugsitz (10) angeordnet ist, dass seine Seitenteile (80) im Wesentlichen parallel zur Rückenlehne angeordnet sind und die Öffnung (110) des Aufnahmebehälters (70) dem oberen Ende der Rückenlehne zugewandt ist.

8. Insassenschutzeinrichtung nach einem der vorangehenden Ansprüche, **dadurch gekennzeichnet, dass** der Sitzbezug (40) an derjenigen Seitenwand (80) des Aufnahmebehälters (70) befestigt ist, die dem Fahrzeuginsassen zugewandt ist.

9. Insassenschutzeinrichtung nach einem der vorangehenden Ansprüche, **dadurch gekennzeichnet, dass** zur Befestigung des Sitzbezuges (40) an der Seitenwand (80) eine Kunststoffleiste (400) vorgesehen ist, deren eine Leistenseite (410) mit dem Sitzbezug (40) und deren andere Leistenseite (460) mit der Seitenwand (80) verbunden ist.

10. Insassenschutzeinrichtung nach Anspruch 9, **dadurch gekennzeichnet, dass** die eine Leistenseite (410) mit dem Sitzbezug (40) vernäht ist und/oder die andere Leistenseite (460) an der Seitenwand (80) eingehakt ist.

11. Insassenschutzeinrichtung nach einem der vorangehenden Ansprüche 1 bis 8, **dadurch gekennzeichnet, dass** die Befestigung des Sitzbezuges (40) an der Seitenwand (80) durch mindestens zwei an der Seitenwand (80) angebrachte Haken (500) bewirkt wird, die in Löcher (510) im Saum (420) des Sitzbezuges (40) eingehakt sind.

12. Insassenschutzeinrichtung nach einem der vorangehenden Ansprüche 1 bis 8, **dadurch gekennzeichnet, dass** die Befestigung des Sitzbezuges (40) an der Seitenwand (80) durch eine Schnappleiste (600) bewirkt ist, in die am Sitzbezug befestigte Schnapphaken (630) einschnappen.

13. Insassenschutzeinrichtung nach Anspruch 12, **dadurch gekennzeichnet, dass** die Schnappleiste (600) an der Seitenwand (80) befestigt ist.

14. Insassenschutzeinrichtung nach einem der Ansprüche 12 oder 13, **dadurch gekennzeichnet, dass** die Schnappleiste über weitere Schnapphaken (620) an der Seitenwand (80) befestigt ist.

15. Insassenschutzeinrichtung nach einem der vorangehenden Ansprüche, **dadurch gekennzeichnet, dass** der Sitzbezug (40) im unteren Bereich (200) der Seitenwand (80) an dieser befestigt ist.

16. Insassenschutzeinrichtung nach einem der vorangehenden Ansprüche, **dadurch gekennzeichnet, dass** zwischen dem Aufnahmebehälter (70) und dem Sitzbezug (40) ein Sitzpolster (30) vorgesehen ist und dass im Bereich der Öffnung (110) des Aufnahmebehälters (70) zumindest eine Sollbruchstelle im Sitzpolster (30) vorhanden ist.

17. Insassenschutzeinrichtung nach Anspruch 16, **dadurch gekennzeichnet, dass** als Sollbruchstelle im Sitzpolster (30) zumindest ein Loch (720) im Sitzpolster (30) vorgesehen ist.
